# EUROPEAN PATENT SPECIFICATION

(11) **EP 0 665 424 B1**
(45) Date of publication and mention of the grant of the patent: **08.08.2001**
(21) Application number: 95200226.9
(22) Date of filing: 30.01.1995
(51) Int. Cl.: G01N 1/36

(54) **Unitary biological specimen processing apparatus**
Einteilige Vorrichtung zur Aufbereitung von biologischen Proben
Appareil unitaire pour la préparation d'échantillons biologiques

(30) Priority: 31.01.1994 DK 13394
(43) Date of publication of application: 02.08.1995
(73) Proprietor: Superfos Pharma Pack (Dudek Plast A/S), 3500 Vaerloese (DK)
(72) Inventor: Superfos Pharma Pack (Dudek Plast A/S), 3500 Vaerloese (DK)
(74) Representative: Lind, Charles Leo

(56) References cited:
- EP-A- 0 312 109
- EP-A- 0 475 496
- WO-A-95/29229
- FR-A- 2 580 490
- GB-A- 2 278 441
- US-A- 4 034 884
- JOURNAL OF ELECTRON MICROSCOPY, vol. 36,no. 6, 1987 TOKYO JP, page 419 J. HIRAOKA 'A multicellular basket for the preparative process in electron microscopy'

## Description

The invention relates to a unitary biological specimen processing apparatus for processing specimens therein, more specific it relates to a tissue processing cassette with a rectangular and open topped bottom and a lid which is cooperable with the bottom, whereby the plate part of the lid and the plate part of the bottom in the cassette are perforated, and in the form of strainers, and the cassette in its closed condition is divided by one or more opposing chamber walls on the bottom and lid into two or more chambers being formed by mating of the opposing chamber walls, the strainer perforations in the plate part of the lid and in the plate part of the bottom in each chamber being of the same size. Such cassettes are known from EP-patent No. 0 475 496 and EP-patent No. 0 312 109 (D1).

The cassettes known from these references are for use by the processing of medical specimens or tissue samples for microscopy, whereby the lid and bottom of the cassette by means of said perforations will have function as strainers.

Such cassettes are used for washing medical specimens having been arranged in the cassette. The specimens may be samples, such as biopsies, of living tissue, e.g. excided skin or small samples taken with special hypodermic needles from internal organs for the purpose of making a diagnosis. The specimens should be processed with a number of fluids for making them suitable for microscopy. The tissue samples may be taken in different ways, rendering the spe-cimens different geometrical sizes. The bottom and lid of the cassette are formed and function as strainers. A washing fluid can in EP-patent No. 0 475 496 be sent through the one strainer, through the chamber in the cassette and out through the second strainer and in EP-patent No. 0 312 109 (D1) be sent through the one set of strainers, through the chambers in the cassette and out through the second set of strainers. The perforations of the strainers should be large enough to secure an efficient washing of the specimens, however so small that the specimens in the cassette cannot be flushed out through the perforations. Thus, there is a need for a number of differently dimensioned strainers and thus a need for a corresponding number of different types of cassettes.

After a complete processing of a specimen in the single chamber in the cassette of EP-patent No. 0 475 496 or of a set of equally sized specimens in the set of chambers in the cassette of EP-Patent No. 0 312 109 (D1) the lid is completely removed from the bottom, the bottom is held over a cup or a set of cups, the bottom is turned upside down so that each of the specimen(s) falls to the lowermost part of the respective cup. Subsequently, the bottom is arranged over the specimen(s) which is/are now covered with a layer of melted wax being poured through the strainer(s) in the bottom of the cassette, from which it flows over the specimen(s). The bottom of the cassette is left on top of the liquid wax. When the wax has hardened to a plug, said plug is removed from the cup(s). The plug is now fastened to the cassette which may now be used as support for the plug, while a sharp knife of a microtome can cut thin slices of those parts of the plug containing the specimen(s) to be placed under the microscope. The sides of the bottom can be used for written or printed notes characterizing the specimen.

Thus, one cassette with a given dimension of strainer perforations are required for each dimension of specimens. Therefore, there must be stored a number of cassette types corresponding to the number of different dimensions of the strainer perforations needed.

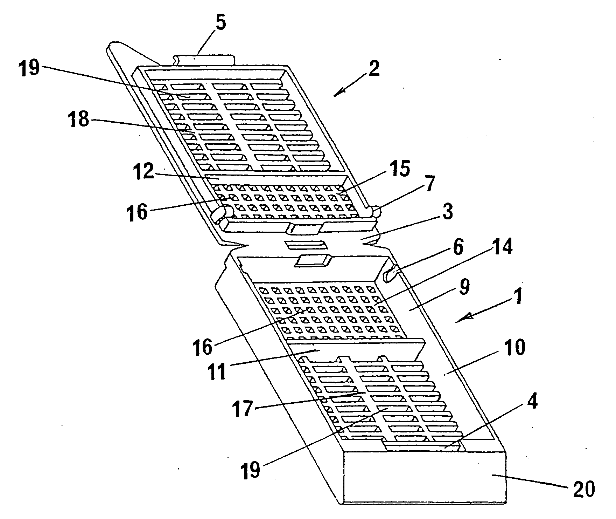

The EP-A-0 312 109 (D1) cassette shows in fig. 1-6 a cassette having several cylindrical chambers and outside on the bottom it has paraffin engaging anchoring protrusions, and in fig.7-9 a cassette also having several chambers, each for processing one of several equally-sized tissue samples in one and same operation. In a given cassette all the chambers have the same size of strainer perforations for processing tissue samples of a certain limited range of sizes. The tissue sizes occur in several sizes, which are not covered by only one range of strainer perforation sizes. Consequently it is necessary for the users to have one cassette with and without an inserted cloth bag, respectively or at least two different cassettes, each having their strainer perforation size covering a certain and limited range of tissue sizes, i. e. several different cassettes are necessary to cover several ranges of tissue sizes.

It is the purpose of the present invention to limit the number of different cassettes to be stored.

Said purpose is achieved by a cassette of the kind mentioned initially being characterized in that the size of the perforations (16, 19) is different for two of the chambers (9, 10), that the first one (9) of the chambers (9, 10) has the strainer perforations (16) of the smallest size, this size being smaller than the smallest size of a typical biopsy specimen, and that the second chamber (10) has strainer perforations (19) of a size being substantially larger, and the smallest dimension of each is larger than the largest dimension of the perforations (16) in the first chamber (9).

Thereby is established an upper limit for the smaller holes and a lower limit for the larger holes in the two different chambers of the tissue processing cassette which will always have a chamber ready to be used for washing a specific specimen, so that the purpose aimed at is achieved, i. e. a limitation of the number of different cassettes to be stored. Furthermore, it is achieved that two or more different sized specimens i.e. situated. in each their different size range, can be washed simultaneously and without any use of a cloth bag.

The bottom and the lid of the cassette may preferably, but not necessarily, be mutually connected by a hinge.

In this case, the chamber having the strainer perforations of the smallest size may preferably be arranged closest to the hinge.

If the lid in the closed condition of the cassette for some reason should be slightly open and thus provide a leak, said leak would increase functionally with the distance from the hinge. Consequently, a risk of specimens of the smallest dimension being flushed out through a leak is minimal if such specimens are arranged in the chamber closest to the hinge, where the chamber has strainer perforations of the smallest dimension.

The invention will now be described in more detail with reference to the drawing showing an embodiment of the cassette according to the invention, whereby the bottom contains a chamber wall dividing the cassette into two chambers with corresponding equally dimensioned strainer perforations, which in the first chamber has a square cross section, each with a given size, and in the second chamber having a rectangular cross section, each having a substantially larger size, the smallest dimension of which is larger than the largest dimension of the strainer perforations in the first chamber.

The drawing shows a cassette with a bottom 1 and a lid 2 made of e.g. plastic and in one piece. The zone in which a side of the bottom 1 and the lid 2 abut each other, forms a hinge 3. The ends of the bottom 1 and the lid 2 opposite to the hinge 3 is shown provided with spring lock parts 4, 5. Close to the hinge 3 the bottom 1 and the lid 2 are provided with other snap engagement parts 6, 7. Said snap engagement parts 6, 7 are designed to enter into function if the hinge 3 should fail.

The inner of the cassette has been divided into two chambers 9, 10 by a chamber wall consisting of two chamber wall parts 11, 12, of which the one chamber wall part 11 is arranged in the bottom 1 and the second chamber wall part 12 in the lid 2 in such a way that the two chamber wall parts 11, 12 together form one chamber wall when the bottom 1 is closed by the lid 2.

In the first chamber 9 closest to the hinge 3 the plate part 14 of the bottom 1 and plate part 15 of the lid have been provided with strainer perforations 16 of square cross section. In the second chamber 10 the plate part 17 of the bottom 1 and the plate part 18 of the lid 2 have strainer perforations 19 with an rectangular cross section. The cassette can be used for washing either a specimen, the size of which fits into the first chamber 9, or another specimen, the size of which fits into the strainer size of the second chamber 10. Thus, only cassettes of one type have to be stored in order to process specimens, each of which needing its own strainer perforation size, in order to be efficiently washed without being flushed out through a strainer perforation.

After the washing process the lid 2 is removed from the bottom along its hinge 3, and the remaining part of the processing is done as already described.

The chamber wall between the chambers is preferably split up and has one part in the lid and the other part in the bottom of the cassette. The space between the two wall parts could very well be insignificant, but at the most of a size corresponding to the smallest strainer perforation size of the adjacent chambers. Thus, the washing effect is increased without the risk of the washed tissue parts being flushed into a neighboring chamber.

## Claims

1. A tissue processing cassette with a rectangular and open topped bottom (1) and a lid (2) which is cooperable with the bottom (2), whereby the plate part (15,18) of the lid (2) and the plate part (14, 17) of the bottom (1) in the cassette (1, 2) are perforated, and in the form of strainers, and the cassette (1, 2) in its closed condition is divided by one or more opposing chamber walls (11, 12) on the bottom (1) and lid (2) into two or more chambers (9, 10) being formed by mating of the opposing chamber walls (11, 12), the strainer perforations (16, 19) in the plate part (15, 18) of the lid (2) and in the plate part (14, 17) of the bottom (2) in each chamber (9, 10) being of the same size, **characterized** in that the size of the perforations (16, 19) is different for two of the chambers (9, 10), that the first one (9) of the chambers (9, 10) has the strainer perforations (16) of the smallest size, this size being smaller than the smallest size of a typical biopsy specimen, and that the second chamber (10) has strainer perforations (19) of a size being substantially larger, and the smallest dimension of each is larger than the largest dimension of the perforations (16) in the first chamber (9).

2. Cassette according to claim 1 wherein the bottom (1) and the lid (2) of the cassette (1, 2) are mutually connected by means of a hinge (3), **characterized** in that the chamber (9) having the strainer perforations (16) of the smallest size is arranged closest to the hinge (3).

## Patentansprüche

1. Eine Kassette zur Aufbereitung von Gewebe mit einem rechtwinkligen und nach oben offenen Boden (1) und einem Deckel (2), der mit dem Boden (2) zusammenwirken kann, wobei der Plattenteil (15, 18) des Deckels (2) und der Plattenteil (14, 17) des Bodens (1) in der Kassette (1, 2) in Form eines Siebes perforiert sind und die Kassette (1, 2) im geschlossenen Zustand durch eine oder mehrere gegenüberliegende Kammerwände (11, 12) an dem Boden (1) und dem Deckel (2) in zwei oder mehrere Kammern (9, 10) unterteilt ist, die durch Abstimmung der gegenüberliegenden Kammerwände (11, 12) geformt sind, wobei die Siebperforationen (16, 19) in dem Plattenteil (15, 18) des Deckels (2) und dem Plattenteil (14, 17) des Bodens (2) in jeder Kammer (9, 10) von der gleichen Größe sind, dadurch gekennzeichnet, dass die Größe der Perforationen (16, 19) für zwei der Kammern (9, 10) verschieden ist, dass die erste Kammer (9) der Kammern (9, 10) die Siebperforationen (16) der kleinsten Größe hat, wobei diese Größe geringer als die kleinste Größe einer typischen Biopsyprobe ist, und dass die zweite Kammer (10) eine Siebperforation (19) wesentlich höherer Größe hat, wobei die geringste Dimensionierung von jeder dieser größer als die größte Dimensionierung der Perforationen (16) in der ersten Kammer (9) ist.

2. Kassette nach Anspruch 1, wobei der Boden (1) und der Deckel (2) dieser Kassette (1, 2) gegenseitig mittels eines Gelenkes (3) miteinander verbunden sind, dadurch gekennzeichnet, dass die Kammer (9), die die Siebperforation (16) der kleinsten Größe aufweist, am nächsten zu dem Gelenk (3) angeordnet ist.

## Revendications

1. Une cassette pour le traitement de tissu biologique présentant un fond rectangulaire ouvert à sa partie supérieure (1) et un couvercle (2) qui est susceptible de coopérer avec le fond (1), dans laquelle la partie plate (15, 18) du couvercle (2) et la partie plate (14, 17) du fond (1) de la cassette (1, 2) sont perforées et se présentent sous forme de passoires, et la cassette (1,2), dans sa position fermée, est divisée par une ou plusieurs cloisons de chambre opposées (11, 12) pratiquées sur le fond (1) et sur le couvercle (2), en deux ou plusieurs chambres (9, 10) formées par coopération des parois de chambre opposées (11, 12), les perforations formant passoire (16, 19) de la partie plate (15, 18) du couvercle (2) et de la partie plate (14, 17) du fond (2) de chaque chambre (9, 10) ayant la même taille, **caractérisée en ce que** la dimension des perforations (16, 19) est différente pour deux des chambres (9, 10), en ce que la première des chambres (9, 10), à savoir la chambre (9), présente des perforations passoires (16) ayant une plus petite taille, cette taille étant plus petite que la plus petite taille d'un spécimen pour biopsie typique, et en ce que la seconde chambre (10) présente des perforations passoires (19) d'une taille sensiblement plus élevée et en ce que leur dimension la plus petite est plus grande que la plus grande dimension des perforations (16) de la première chambre (9).

2. Cassette selon la revendication 1, dans laquelle le fond (1) et le couvercle (2) de la cassette (1, 2) sont mutuellement connectés par une charnière (3), caractérisée en ce que la chambre (9) présentant les perforations passoires (16) ayant la plus petite taille est située la plus proche de la charnière (3).
